# EUROPEAN PATENT APPLICATION

(11) **EP 3 979 082 A1**
(43) Date of publication of application: **06.04.2022**
(21) Application number: 20868443.1
(22) Date of filing: 18.09.2020
(51) Int. Cl.: G06F 12/02, G06F 9/50

(54) **MEMORY RECLAMATION METHOD AND APPARATUS, ELECTRONIC DEVICE, AND STORAGE MEDIUM**

(30) Priority: 27.09.2019 CN 201910927294
(71) Applicant: GUANGDONG OPPO MOBILE TELECOMMUNICATIONS CORP., LTD., Dongguan, Guangdong 523860 (CN)
(72) Inventor: ZHOU, Huacai, Dongguan, Guangdong 523860 (CN)
(74) Representative: Fassio, Valeria
(86) International application number: PCT/CN2020/116212
(87) International publication number: WO 2021/057619

(57) **Abstract**

Disclosed are a memory reclamation method and apparatus, an electronic device, and a storage medium. The method comprises: in a memory reclamation scenario, obtaining the memory pressure, the memory pressure representing the ratio of an unreclaimed memory to a scanned memory within a historical time window; obtaining a memory reclamation ratio corresponding to the memory pressure, wherein the memory reclamation ratio represents the ratio among a plurality of memory reclamation objects; the higher the memory pressure, the lower the ratio of memory reclamation objects which need to consume CPU resources during reclamation in the corresponding memory reclamation ratio; and performing memory reclamation on the basis of the memory reclamation ratio. Therefore, when memory reclamation ratios corresponding to different memory reclamation pressures are different, the current memory pressure can be obtained at the beginning of the memory reclamation, and then how many should be reclaimed for each of a plurality of memory reclamation objects is determined according to the current memory pressure, thereby improving the flexibility of the memory reclamation process.

## Description

### CROSS-REFERENCE TO RELATED APPLICATIONS

The present application claims priority of Chinese Patent Application No. 201910927294.5 filed on September 27, 2019, the contents of which are hereby incorporated by reference.

### TECHNICAL FIELD

The present disclosure relates to computer technology, and in particular to a method for memory reclamation, an apparatus, an electronic device and a storage medium.

### BACKGROUND

A memory is also called a main memory. It is a storage space directly addressable by a Central Processing Unit (CPU), and is made of semi-conductive components. Memory space in an electronic device is limited. A normal system of an electronic device may perform memory reclamation under some circumstances so as to make sure there is always enough available memory in the system. However, related memory reclamation methods cannot provide enough flexibility.

### SUMMARY

To solve the above-mentioned problem, the present disclosure provides a method for memory reclamation, an apparatus, an electronic device and a storage medium.

In a first aspect, a method for memory reclamation is provided. The method includes: obtaining memory pressure in a memory reclamation scenario, wherein the memory pressure represents a ratio between unreclaimed memory and scanned memory in a historical time window; obtaining a memory reclamation ratio corresponding to the memory pressure, wherein the memory reclamation ratio represents proportions of a plurality of memory reclamation objects, wherein the memory reclamation ratio corresponding to a higher memory pressure may indicate a lower proportion of at least one of the memory reclamation objects that may require CPU resource consumption; and performing memory reclamation based on the memory reclamation ratio.

In a second aspect, an apparatus for memory reclamation is provided. The apparatus includes: a memory pressure obtaining unit, configured to obtain memory pressure in a memory reclamation scenario, wherein the memory pressure represents a ratio between unreclaimed memory and scanned memory in a historical time window; a reclamation parameter obtaining unit, configured to obtain a memory reclamation ratio corresponding to the memory pressure, wherein the memory reclamation ratio represents proportions of a plurality of memory reclamation objects, wherein the memory reclamation ratio corresponding to a higher memory pressure may indicate a lower proportion of at least one of the memory reclamation objects that may require CPU resource consumption; and a memory reclamation unit, configured to perform memory reclamation based on the memory reclamation ratio.

In a third aspect, an electronic device is provided. The electronic device includes one or more processors and a memory. One or more programs are stored in the memory and configured to, when being executed by the one or more processors, perform the above method for memory reclamation.

In a fourth aspect, a computer readable storage medium is provided. The computer readable storage medium stores program instructions which are configured to, when being executed by a processor, perform the method for memory reclamation.

### BRIEF DESCRIPTION OF THE DRAWINGS

In order to clearly explain the technical solutions in the embodiments of the present disclosure, the drawings used in the description of the embodiments will be briefly described below. Obviously, the drawings in the following description are merely some embodiments of the present disclosure. For those of ordinary skill in the art, other drawings may also be obtained based on these drawings without any creative work.
FIG. 1 illustrates a flow chart of a method for memory reclamation according to an embodiment of the present disclosure.
FIG. 2 illustrates a flow chart of a method for memory reclamation according to another embodiment of the present disclosure.
FIG. 3 is a schematic diagram showing multiple periodic periods in a method for memory reclamation according to an embodiment of the present disclosure.
FIG. 4 is a schematic diagram showing operating applications in multiple periodic periods in a memory reclamation method according to an embodiment of the present disclosure.
FIG. 5 illustrates a flow chart of a method for memory reclamation according to yet another embodiment of the present disclosure.
FIG. 6 illustrates a flow chart of a method for memory reclamation according to another embodiment of the present disclosure.
FIG. 7 illustrates a schematic diagram of an apparatus for memory reclamation according to an embodiment of the present disclosure.
FIG. 8 illustrates a schematic diagram of an apparatus for memory reclamation according to another embodiment of the present disclosure.
FIG. 9 illustrates a schematic diagram of an electronic device for performing the method for memory reclamation according to one or more embodiments of the present disclosure.
FIG. 10 shows a storage unit configured to store or carry program instructions for achieving the method for memory reclamation according to one or more embodiments of the present disclosure.

### DETAILED DESCRIPTION

The disclosure will now be described in detail with reference to the accompanying drawings and examples. Apparently, the described embodiments are only a part of the embodiments of the present disclosure, not all of the embodiments. All other embodiments obtained by a person of ordinary skill in the art based on the embodiments of the present invention without creative efforts shall fall within the protection scope of the present invention.

Since the memory space is limited, memory reclamation is a common mechanism in operating systems. There are mainly two reasons for memory reclamation: the system need to provide enough memory for abrupt memory request at any time such that use of the cache and other related memory does not render the system in a status where available memory is very limited during long period; and memory reclamation may also be triggered responsive to memory request which requests more memory than available memory.

By studying related memory reclamation processes, the inventor found the current memory reclamation methods cannot provide enough flexibility. Taking the Android operating system as example, there mainly exists two memory reclamation mechanism in the Android operating system. The first one is a reclamation mechanism based on the *kswapd* process, according to which the *kswapd* process regularly runs in the background. The second one is a reclamation mechanism based on the *direct reclaim* process, according to which the *direct reclaim* process performs memory reclamation when receiving a memory distribution request. It can be seen, parameters for memory reclamation in these related memory reclamation methods are relatively inflexible.

To solve the problem, the inventor, during research of memory reclamation, studied the memory pressure which represents the ratio between unreclaimed memory and scanned memory in historical time windows, and provides a method for memory reclamation, an apparatus, an electronic device and a storage medium. According to the present disclosure, in the circumstance where different memory pressure corresponds to different memory reclamation ratios, a current memory pressure may be acquired at the beginning of memory reclamation, and then the memory amount which should be reclaimed of each of different memory reclamation objects may be determined based on the current memory pressure. The implementation of the present disclosure may improve the flexibility of memory reclamation.

Different embodiments of the present disclosure will be described in detail with reference to the accompanying drawings.

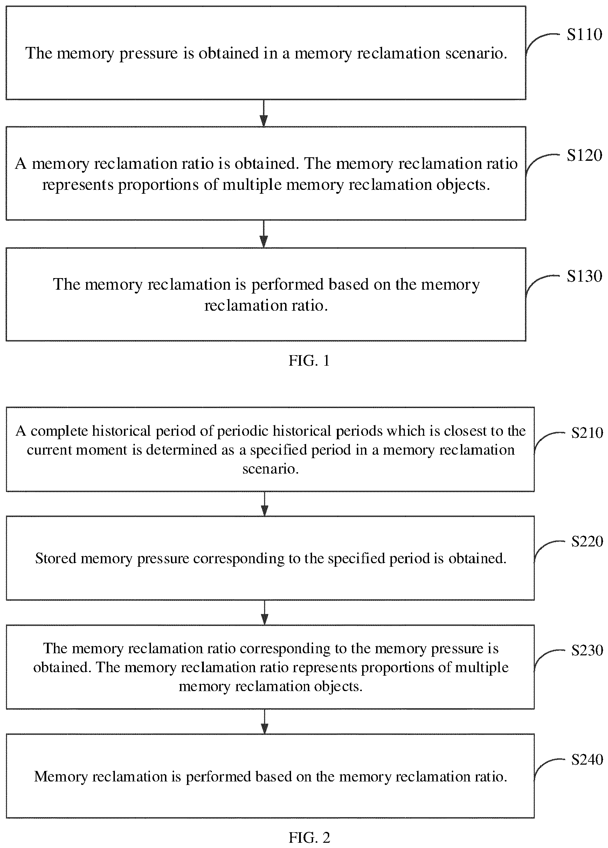

FIG. 1 shows a memory reclamation method according to an embodiment of the present disclosure. The method includes operations described in the following blocks S110 to S130.

S110: The memory pressure is obtained in a memory reclamation scenario. The memory pressure represents a ratio between unreclaimed memory and scanned memory in a historical time window.

In some embodiments of the present disclosure, multiple method may be applied to detect whether a memory reclamation scenario is activated.

In one embodiment, when it is detected a process that is configured to perform memory reclamation is performed, it is determined that the memory reclamation scenario is activated. For example, if the method of the present embodiment is implemented in an Android operating system, it may be determined that the memory reclamation scenario is activated when operating of the *kswapd* process or the *direct reclaim* process is detected.

It can be understood that, the memory pressure described in the present embodiment represents a ratio between unreclaimed memory and scanned memory in a historical time window. In some embodiments, an electronic device may be configured to periodically calculate its memory pressure in different periods, and one period may be taken as the time window as mentioned above. It should be noted that different memory areas in the memory space may store different contents, and contents in some of the memory areas cannot be directly reclaimed when being scanned. Moreover, not all the used memory can be reclaimed when being scanned. In one embodiment, the memory pressure may be calculated by (1-reclaimed/scanned)^{∗}100, where the reclaimed represents the size of unreclaimed memory and the scanned represents the size of scanned memory.

In one embodiment, the size of the time window may be adjusted based on actual requirement.

In one embodiment, the electronic device may adjust the size of the time window according to an amount of applications in operation. It should be noted, the electronic device may occasionally request for further memory during operation because of data processing demand. Thus, when relatively more applications are in operations, relatively more memory requests are expected and requests for relatively more memory are expected. In one embodiment, in this situation, the electronic device may periodically obtain the amount of applications in operation, match the amount of applications with multiple periods, and then take the length of time corresponding to the matched period as the length of the time window. For instance, the electronic device may define a period A, a period B, a period C and a period D for the applications in operations. The period A corresponds to a time window A, the period B corresponds to a time window B, the period C corresponds to a time window C, and the period D corresponds to a time window D. When the identified number of applications currently in operation matches that of the period B, the electronic device may take the time window B as its current time window.

S120: A memory reclamation ratio is obtained. The memory reclamation ratio represents proportions of multiple memory reclamation objects. In some embodiments, the memory reclamation ratio corresponding to a higher memory pressure may indicate a lower proportion of at least one memory reclamation object that may require CPU resource consumption.

It should be understood, CPU resource consumption during reclamation of different memory reclamation objects is different because different memory reclamation objects have different characteristics. For example, when being reclaimed, some memory reclamation objects such as anonymous pages should be firstly compressed and then stored in the Random Access Memory (RAM), which requires a certain consumption of CPU resources. In order to improve the overall speed of the electronic device, occupation of CPU resources is suggested to be reduced when the memory pressure is relatively high. Thus, reclamation of memory reclamation objects that may cause CPU resource consumption should be reduced. Accordingly, the proportion of memory reclamation objects that may require CPU resource consumption according to the memory reclamation ratio may be reduced.

In one embodiment, a mapping relationship between different preset memory pressure and corresponding memory reclamation ratios may be pre-stored in the electronic device. When the electronic device have obtained the memory pressure, the obtained memory pressure may be matched with different ones of the preset memory pressure. Then, the memory reclamation ratio corresponding to the matched memory pressure (the one matching the obtained memory pressure) may be determined as the memory reclamation ratio to be adopted in further memory reclamation. For example, the preset memory pressure stored in the electronic device may include memory pressure A, memory pressure B, memory pressure C, and memory pressure D. The memory reclamation ratio corresponding to memory pressure A may be 0:200. The memory reclamation ratio corresponding to memory pressure B may be 40:160. The memory reclamation ratio corresponding to memory pressure C may be 80:120. The memory reclamation ratio corresponding to memory pressure D may be 200:0. When memory pressure X is obtained, the memory pressure X may be matched with the memory pressure A, B, C and D. If the memory pressure X matches the memory pressure C, its corresponding memory reclamation ratio is determined to be 80:120.

It should be noted, during matching of memory pressure, a certain deviation is tolerable in order to improve the matching success rate. For instance, if a certain deviation exists between the foregoing memory pressure X and the memory pressure C, the electronic device may still determine that the memory pressure X matches the memory pressure C.

S130: The memory reclamation is performed based on the memory reclamation ratio.

The present application provides a method for memory reclamation. Current memory pressure which represents the ratio between unreclaimed memory and scanned memory may firstly be acquired in a memory reclamation scenario. Then the memory reclamation ratio corresponding to the memory pressure may be obtained. The memory reclamation may be performed based on the memory reclamation ratio. According to the present disclosure, in the circumstance where different memory pressure corresponds to different memory reclamation ratios, the current memory pressure may firstly be acquired at the beginning of memory reclamation, and then the memory amount which should be reclaimed of each of the memory reclamation objects may be determined based on the current memory pressure. Thus, the implementation of the present disclosure may improve the flexibility of memory reclamation.

FIG. 2 shows a method for memory reclamation according to an embodiment of the present disclosure. The method includes operations described in following blocks S210 to S240.

S210: A complete historical period of periodic historical periods which is closest to the current moment is determined as a specified period in a memory reclamation scenario.

S220: Stored memory pressure corresponding to the specified period is obtained. The memory pressure represents a ratio between unreclaimed memory and scanned memory in a historical time window.

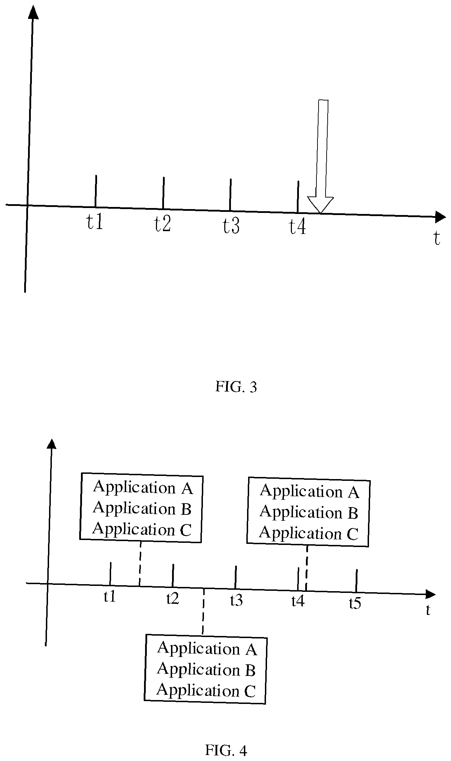

In one embodiment, each periodic period has a start time and an end time. For example, in multiple periods shown in FIG. 3, the start time and end time of the period 0 to t1 are respectively 0 and t1, and the start time and end time of the period t2 to t3 are respectively t2 and t3. The memory pressure corresponding to one period may represent the memory pressure information in the corresponding period. In some circumstance, the memory pressure may change very frequently. If the memory pressure of a previous period is utilized to calculate the memory distribution ratio, the actual use of memory may be close to the calculation result to some extent, but not accurate enough.

It should be noted that, memory pressure in some different periods may be quite similar, which may result from similar or same applications running in these periods. For example, as shown in FIG. 4, applications A, B and C are in operation in both the period t1 to t2 and the period t4 to t5. It can be understood that the period t4 to t5 may be taken as a same or similar period as the period t1 to t2.

Correspondingly, in one embodiment, the operation of obtaining the stored corresponding memory pressure of a specified period includes: obtaining a characteristic parameter of current applications, wherein the characteristic parameter of the current applications represents an occupation level of CPU resources of the current applications; determining, based on the characteristic parameter of the current applications, a target historical period which corresponds the current moment as the specified period; and obtaining the stored memory pressure of the specified period.

In one embodiment, the electronic device may calculate the characteristic parameter of applications of the current period at the start time and end time of each period respectively. It should be understood, the applications detected at the start time of a period may be an estimation on which applications would be performed in this period, which may help find out the same target period corresponding to the current period. The applications detected at the end time of a period may distinctly indicate which application are actually performed in this period. The characteristic parameter of applications corresponding to the current period which is calculated in the current period may be utilized for subsequent periods to match with previous same periods. The characteristic parameter of applications calculated at the start time of each period may be utilized for estimating same target periods corresponding to the current period before the current period ends. In this way, the operation of obtaining the memory reclamation ratio may be more rapid and effective.

In one embodiment, the characteristic parameter of current applications may be determined as a ratio between an amount of threads activated by current applications and a total amount of threads that the CPU is capable of processing in parallel. A higher characteristic parameter may indicate a higher occupation level of the CPU. For example, application A, B, C and D are currently running. The amount of active threads corresponding to the application A is equal to a, the amount of active threads corresponding to the application B is equal to b, the amount of active threads corresponding to the application C is equal to c, and the amount of active threads corresponding to the application D is equal to d. Assuming the amount of the total threads that the CPU can process in parallel is equal to m, then the characteristic parameter of current applications may be calculated by (a+b+c+d)/m.

In one embodiment, the characteristic parameter of applications calculated at the end time of each period is equal to a ratio between an average number of threads of all applications in the current period and the total amount of threads that the CPU is capable of processing in parallel. For example, in one period are performed applications B, C and D. The amount of threads having been run by the application B is equal to t, the amount of threads having been run by the application C is equal to k, and the amount of threads having been run by the application D is equal to 1. Then the characteristic parameter of applications in this period may be calculated by (t+k+1)/3/m.

In one embodiment, the operation of determining, based on the characteristic parameter of the current applications, the target historical period which corresponds to the period to which the current moment belongs as the specified period may include: comparing the characteristic parameter of the current applications with characteristic parameters of applications of multiple historical periods; determining one of the historical periods of which the characteristic parameter of applications is same as the characteristic parameter of the current applications as the target historical period; and determining the target historical period as the specified period.

In one embodiment, the method may further includes: obtaining an amount of applications in operation and priority levels of the applications in operation of each periodic historical period, wherein a higher priority level indicates higher memory occupation during operation of the applications; obtaining a first score corresponding to the amount of applications in operation; obtaining a second score corresponding to the priority levels of the applications in operation; and calculating a characteristic parameter of corresponding applications of each periodic historical period based on the first score, a first predefined weight corresponding to the first score, the second score and a second predefined weight corresponding to the second score.

S230: The memory reclamation ratio corresponding to the memory pressure is obtained. The memory reclamation ratio represents proportion of multiple memory reclamation objects. The memory reclamation ratio corresponding to a higher memory pressure may indicate a lower proportion of at least one memory reclamation object that may require CPU resource consumption.

It should be noted, the electronic device may define multiple memory reclamation scenarios. In different memory reclamation scenarios, different memory is required to be reclaimed. For example, in the memory reclamation scenario where the *kswapd* process runs, the scenario may mainly require anonymous pages to be reclaimed because the *kswapd* process regularly runs in the background. In the memory reclamation scenario where the *direct reclaim* process runs, the scenario may mainly require file-backed pages to be reclaimed because the *direct reclaim* process runs when memory distribution is running.

In some embodiments of the present disclosure, various method may be adopted to confirm the current memory reclamation scenario.

In one embodiment, an identifier of a process currently performing the memory reclamation may be identified, and the current memory reclamation scenario may be determined based on the identifier. It should be understood, every memory reclamation in an electronic device is performed by a specific process, such as the foregoing *kswapd* and *direct reclaim* processes. Therefore, currently application in operation may be detected periodically, and when it is detected that the identifier of a currently running operation is same as the identifier of a specific memory reclamation process, it is determined that the memory reclamation scenario corresponding to the identifier is currently active. For example, if the identifier of the process currently performing memory reclamation is *"kswapd",* it is determined the *kswapd* memory reclamation scenario is active, and if the identifier of the process currently performing memory reclamation is *"direct reclaim",* it is determined the *direct reclaim* memory reclamation scenario is active.

In another embodiment, the current memory reclamation scenario may be determined based on currently running applications.

It should be noted, different applications requires different memory consumption. Thus, determining the memory reclamation scenario based on the different applications may help improve the performance of these applications. Some applications may frequently request for further memory during operation. For example, short video applications may request of increase of their memory distribution to buffer requested short video. For example, instant communication applications may request memory distribution to buffer video image data when a video chat is detected. For example, some applications naturally, when being activated, request relatively much memory.

In one embodiment, when it is detected that a process performing memory reclamation is activated, currently running applications are further detected, and then the current memory reclamation scenario may be determined based on the currently running applications. Accordingly, the memory reclamation ratio may be determined.

In another embodiment, the identifier of currently running processes and the currently running applications may both be utilized to cooperatively determine the current memory reclamation scenario.

As described above, different embodiments of the present disclosure provide multiple methods to determine the current memory reclamation scenario, and the memory reclamation ratios corresponding to different memory reclamation scenarios are different which may meet the memory reclamation requirement of different scenarios. In an exemplary embodiment, the memory reclamation objects mentioned in embodiments of the present disclosure may include anonymous pages and file-backed pages. The anonymous page is a kind of page which does not have backend file, such as stack and data frame, and it does not exist in file form. The file-backed page is a kind of page which has backend file, for example, data stored in the file-backed page has corresponding data in the disk.

Cost for reclaiming anonymous pages and file-backed pages is different. The anonymous pages, when being reclaimed, are compressed and the stored in RAM. This process requires the CPU to compress the anonymous pages, and decompress them when using. That is, reclamation of anonymous pages consumes a certain time of CPU and is relatively slow. Reclamation of file-backed pages may include two situations: if the content corresponding to a file-backed page has not been modified, the content of the file-backed page may be abandoned directly; if the content corresponding to a file-backed page has been modified, the content of the file-backed page may be rewritten to the disk and then abandoned. When the content of a reclaimed file-backed page is needed again, it should be read again from the disk. Normally, the majority of file-backed pages are not modified, and thus the reclamation of file-backed pages are relatively fast.

In one embodiment, the method may mainly detect applications running in foreground. Taking an electronic using Android operating system as example, methods of *ActivityManager* and *getRunningTasks* may be performed to acquire names of applications running in foreground. Furthermore, the electronic device may acquire a list of applications the user uses through *UsageStatsManager,* and identify the applications in the list which are currently used as current foreground applications. Alternatively, change of window focus may be monitored through *AccessibilityService* of Android system, and the package name corresponding to the window focus may be determined as the applications running in foreground.

In the following embodiment, anonymous pages and file-backed pages will be taken as exemplary memory reclamation objects to describe the method of the present embodiment. The term "ratio" used in the present embodiment may refer to the ratio between anonymous pages and file-backed pages.

In the case where the identifier of the process performing memory reclamation is firstly identified and then the current memory reclamation scenario is determined based on the identifier, the reclamation ratios between the anonymous pages and the file-backed pages corresponding to different memory reclamation processes may be preconfigured and be used as the corresponding memory reclamation ratios of memory pressure in different memory reclamation scenarios. When it is detected a memory reclamation process is activated, the identifier of the memory reclamation process may be obtained. The reclamation ratio between anonymous pages and file-backed pages may then be inquired according to the identifier of the memory reclamation process and be used as the memory reclamation ratio corresponding to the memory pressure of the current memory reclamation scenario.

| Identifier | Ratio |
|---|---|
| *direct reclaim* | 0:200 |
| *kswapd* | 200:0 |

As shown in the table above, the ratio corresponding to the identifier *"direct reclaim"* is 0:200, which indicates only file-backed pages are to be reclaimed and no anonymous pages are to be reclaimed. The ratio corresponding to the identifier *"kswapd"* is 200:0, which indicates only anonymous pages are to be reclaimed and no file-backed pages are to be reclaimed. Apparently, the ratios may be defined based on actual requirement. For example, the ratio corresponding to the process with the identifier *"direct reclaim"* may be defined as 50:150, which indicates more file-backed pages than anonymous pages should be reclaimed.

In another embodiment, in the method of determining the current memory reclamation scenario based on currently running applications, a mapping relationship between applications and memory reclamation ratios may be preset. When it is detected a memory reclamation process is activated, currently running applications may be acquired, and the ratio corresponding to the currently running applications may be inquired and taken as the memory reclamation ratio corresponding to the memory pressure of the current memory reclamation scenario.

| Identifier of Application | Ratio |
|---|---|
| Application A | 10:190 |
| Application B | 20:180 |
| Application C | 30:170 |

As shown in the table above, each application corresponds to a respective memory reclamation ratio. A higher proportion of file-backed pages in the ratios may represent a higher necessary memory reclamation efficiency. When it is detected memory reclamation is activated, the ratio 10:190 corresponding to the application A may be taken as the memory reclamation ratio if it is detected the application A is running, and the ratio 20:180 corresponding to the application B may be taken as the memory reclamation ratio if it is detected the application B is running.

It should be noted, in some embodiments, the ratio corresponding to the process itself and the ratio corresponding to currently running applications may be utilized to cooperatively determine the ratio corresponding to the current scenario. For example, the ratio corresponding to the process with the identifier *"direct reclaim"* is 0:200, and the ratio corresponding to the application A is 10:190 when it is detected the application A is running. Thus, when it is detected at the same time that the process *"direct reclaim"* is active and the application A is running, an average value of the ratio corresponding to the currently running applications and the ratio corresponding to the current memory reclamation process may be taken as the memory reclamation ratio of the current memory reclamation scenario. In this way, the result may satisfy the memory reclamation ratio corresponding to the process to some extent, and also satisfy the memory reclamation ratio corresponding to current applications to some extent. For example, the ratio corresponding to the process with the identifier *"direct reclaim"* is 0:200, and the ratio corresponding to the application A is 10:190, the ratio acquired by calculating their average value is equal to 5:195.

It should be understood, in some embodiments, not all applications have corresponding ratios. Instead, only a certain specified applications have corresponding ratios. In one embodiment, a list may be defined in the electronic device to mark the specified applications. In this case, in order to rapidly determine whether current applications belong to the above mentioned specified applications (i.e., applications having corresponding memory reclamation ratios), an accompanying file may be generated when one of the specified applications is activated and be written into the identifier of the currently running specified application. In this embodiment, when it is detected a memory reclamation process is activated, it may be inquired whether an accompanying file is generated. If yes, the memory reclamation ratio corresponding to the application recorded in the accompanying file and the memory reclamation ratio corresponding to the activated memory reclamation process may be considered together to determine the memory reclamation ratio corresponding to the current memory reclamation scenario, where, for example, the above-mentioned average value calculation method may be applied. If no accompanying file is detected, the memory reclamation ratio corresponding to the memory reclamation process may be taken directly as the memory reclamation ratio of the current memory reclamation scenario.

It should be noted, in one embodiment, in the method of determining the current memory reclamation scenario by detecting current applications, the current memory reclamation scenario may be determined by estimating which applications will be activated. For example, in some embodiments, some applications of an electronic device are configure to run at a given time, such as alarm-type applications. Some applications may be regularly activated at a specific period of each day because of user habits. For example, takeaway-food applications may be regularly activated every day at meal time, and video-related applications may be regularly activated every day by the user at the time the user takes a subway.

In one embodiment, the operation of obtaining the memory reclamation ratio corresponding to the memory pressure may include: obtaining a mapping relationship between different predefined memory pressure and corresponding memory reclamation ratios; matching the memory pressure with the multiple predefined memory pressure in a given sequence; and determining a memory reclamation ratio corresponding to a matched one of the multiple predefined memory pressure as the memory reclamation ratio corresponding to the memory pressure.

S240: Memory reclamation is performed based on the memory reclamation ratio.

The present application provides a method for memory reclamation. Current memory pressure which represents the ratio between unreclaimed memory and scanned memory may firstly be acquired in a memory reclamation scenario. Specifically, the memory pressure may be defined as memory pressure of one complete historical period of multiple periodic historical periods which is closest to current moment. Then the memory reclamation ratio corresponding to the memory pressure may be obtained. The memory reclamation may be performed based on the memory reclamation ratio. According to the present disclosure, in the circumstance where different memory pressure corresponds to different memory reclamation ratios, the current memory pressure may firstly be acquired at the beginning of memory reclamation, and then the memory amount which should be reclaimed of each of the memory reclamation objects may be determined based on the current memory pressure. Thus, the implementation of the present disclosure may improve the flexibility of memory reclamation.

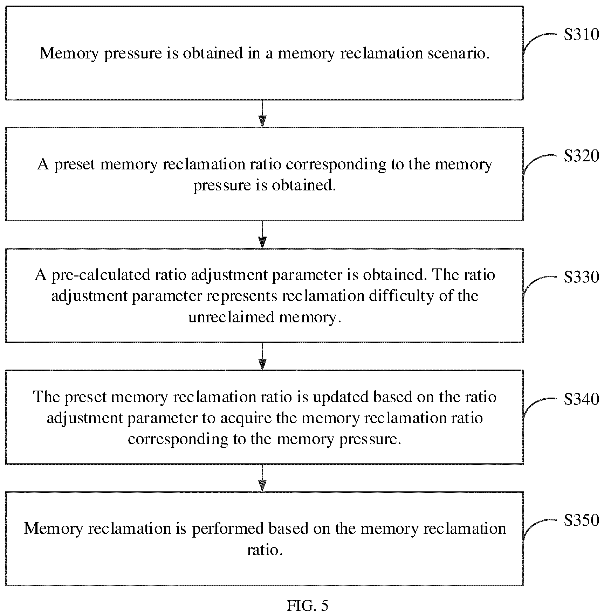

FIG. 5 shows a method for memory reclamation according to an embodiment of the present disclosure. The method may include operations described in following blocks S310 to S350.

S310: Memory pressure is obtained in a memory reclamation scenario. The memory pressure represents a ratio between unreclaimed memory and scanned memory in a historical time window.

S320: A preset memory reclamation ratio corresponding to the memory pressure is obtained.

S330: A pre-calculated ratio adjustment parameter is obtained. The ratio adjustment parameter represents reclamation difficulty of the unreclaimed memory.

S340: The preset memory reclamation ratio is updated based on the ratio adjustment parameter to acquire the memory reclamation ratio corresponding to the memory pressure. The memory reclamation ratio represents proportions of multiple memory reclamation objects. The memory reclamation ratio corresponding to a higher memory pressure may indicate a lower proportion of at least one memory reclamation object that may require CPU resource consumption.

In one embodiment, the operation of updating the preset memory reclamation ratio based on the ratio adjustment parameter to acquire the memory reclamation ratio corresponding to the memory pressure may include: if the ratio adjustment parameter indicates the unreclaimed memory is used to support a file system (it should be understood, since the file system performs file reading, memory supporting the file system cannot be reclaimed during memory reclamation process), reducing a proportion of memory reclamation objects which consume CUP resources in the preset memory reclamation ratio, so as to acquire the memory reclamation ratio corresponding to the memory pressure; and if the ratio adjustment parameter indicates the unreclaimed memory is used for data storage, taking the preset memory reclamation ratio as the memory reclamation ratio corresponding to the memory pressure.

S350: Memory reclamation is performed based on the memory reclamation ratio.

The present application provides a method for memory reclamation. Current memory pressure which represents the ratio between unreclaimed memory and scanned memory may firstly be acquired in a memory reclamation scenario. Then the memory reclamation ratio corresponding to the memory pressure may be obtained. The memory reclamation may be performed based on the memory reclamation ratio. According to the present disclosure, in the circumstance where different memory pressure corresponds to different memory reclamation ratios, the current memory pressure may firstly be acquired at the beginning of memory reclamation, and then the memory amount which should be reclaimed of each of the memory reclamation objects may be determined based on the current memory pressure. Thus, the implementation of the present disclosure may improve the flexibility of memory reclamation. Furthermore, according to the present embodiment, the memory reclamation ratio acquired based on the memory pressure may be a preset memory reclamation ratio. After the preset memory reclamation ratio is obtained, the preset memory reclamation ratio may be updated based on a ratio adjustment parameter which represents reclamation difficulty of the unreclaimed memory so as to obtain the memory reclamation ratio which actually corresponds to the memory pressure.

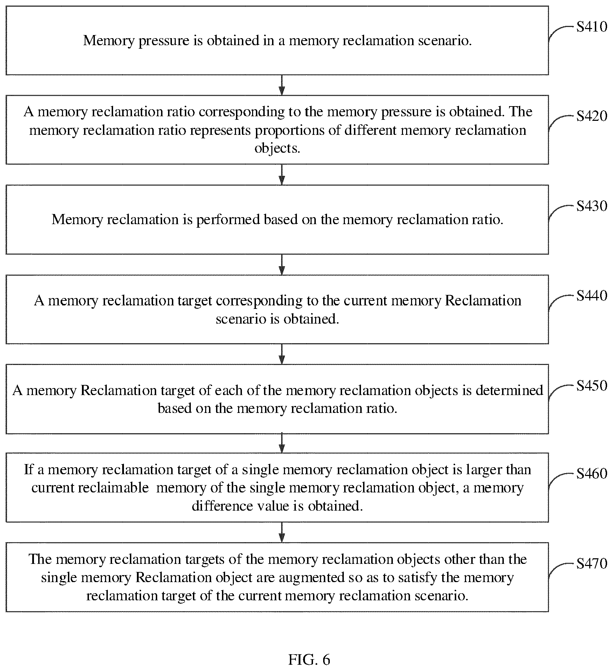

FIG. 6 shows a memory reclamation method according to an embodiment of the present disclosure. The method may include operations described in following blocks S410 to S470.

S410: Memory pressure is obtained in a memory reclamation scenario. The memory pressure represents a ratio between unreclaimed memory and scanned memory in a historical time window.

S420: A memory reclamation ratio corresponding to the memory pressure is obtained. The memory reclamation ratio represents proportions of different memory reclamation objects. The memory reclamation ratio corresponding to a higher memory pressure may indicate a lower proportion of at least one memory reclamation object that may require CPU resource consumption.

S430: Memory reclamation is performed based on the memory reclamation ratio.

S440: A memory reclamation target corresponding to the current memory reclamation scenario is obtained.

S450: A memory reclamation target of each of the memory reclamation objects is determined based on the memory reclamation ratio.

S460: If a memory reclamation target of a single memory reclamation object is larger than current reclaimable memory of the single memory reclamation object, a memory difference value is obtained. The memory difference value is a difference value between the memory reclamation target and the current reclaimable memory of the single memory reclamation object.

It should be understood, reclaimable memory of the memory reclamation objects are limited. For example, if the size of anonymous pages in current memory is 200 MB, reclaimable data of anonymous pages is also 200 MB. In this situation, when the memory reclamation target is set and memory reclamation is to be performed based on the current memory reclamation scenario, the expectant memory may not be achieved.

Accordingly, after the memory reclamation is performed based on the memory reclamation ratio corresponding to the current memory reclamation scenario, the memory reclamation object of the current memory reclamation scenario may be obtained. The objects of which the memory reclamation targets are not accomplished may be taken as pending memory reclamation objects. Further, the difference value between the memory reclamation target and the reclaimable memory of each pending memory reclamation object may be calculated and used as the above-mentioned memory difference value. Then, memory corresponding to the memory difference value may be reclaimed from other memory reclamation objects. In this way, the memory reclamation may be successfully performed based on the preset memory reclamation ratio while the preset memory reclamation target can be achieved.

S470: The memory reclamation targets of the memory reclamation objects other than the single memory reclamation object are augmented so as to satisfy the memory reclamation target of the current memory reclamation scenario.

In an example, the memory reclamation ratio between anonymous pages and file-backed pages may be 50:150, and the memory reclamation target may be 100 MB. That is, it is required to reclaim 25 MB of anonymous pages and 75 MB of file-backed pages. However, currently reclaimable memory of anonymous pages is only 15 MB. Thus, only 90 MB (75 MB+15 MB=90 MB) of memory can be reclaimed after reclamation based on this ratio. According to above-mentioned memory difference value calculation method, the memory difference value may be equal to 10 MB (25 MB-15 MB=10 MB). Accordingly, another 10 MB of file-backed pages may be reclaimed as supplement.

It should be noted, the purpose of setting multiple memory reclamation methods based on the above-mentioned memory reclamation principle is improving memory reclamation efficiency. For different memory reclamation objects, cost of reclamation of these objects is different. If the memory reclamation amount of a memory reclamation object with a low memory reclamation efficiency is augmented, the overall reclamation efficiency may be reduced. Accordingly, in some embodiments, the multiple memory reclamation objects may include anonymous pages and file-backed pages. Before the operation of augmenting the memory reclamation targets of the memory reclamation objects other than the single memory reclamation object, the method may further include: when the memory reclamation objects of which the memory reclamation targets are to be augmented are file-backed pages, performing the augmenting the memory reclamation targets of the memory reclamation objects other than the single memory reclamation object; when the memory reclamation objects of which the memory reclamation targets are to be augmented are anonymous pages, cancelling the augmenting the memory reclamation targets of the memory reclamation objects other than the single memory reclamation object. In this way, the overall memory reclamation efficiency may be improved.

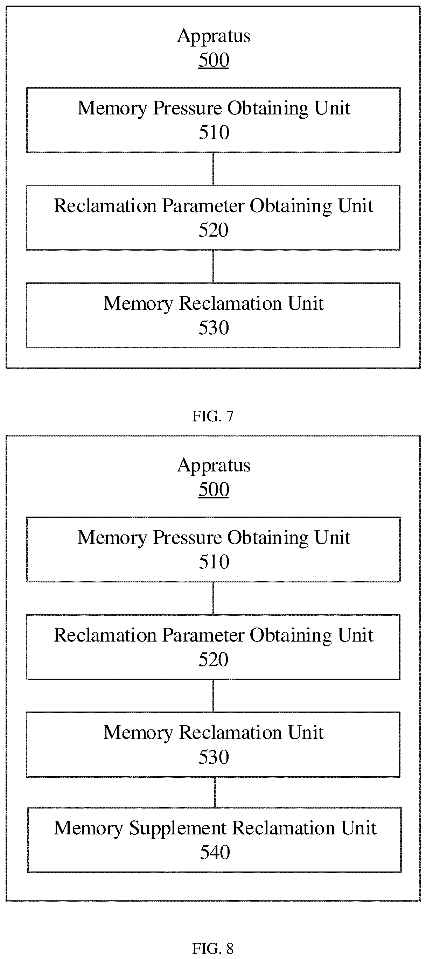

FIG. 7 shows an apparatus 500 for memory reclamation according to an embodiment of the present disclosure. The apparatus 500 includes a memory pressure obtaining unit 510, a reclamation parameter obtaining unit 520 and a memory reclamation unit 530.

The memory pressure obtaining unit 510 is configured to obtain memory pressure in a memory reclamation scenario. The memory pressure represents a ratio between unreclaimed memory and scanned memory in a historical time window.

In one embodiments, the memory pressure obtaining unit 510 is specifically configured to determine a complete historical period of periodic historical periods which is closest to the current moment as a specified period, and acquire the stored memory pressure of the specified period.

In one embodiment, the memory pressure obtaining unit 510 is specifically configured to acquire a mapping relationship between multiple predefined memory pressure and corresponding memory reclamation ratios, match the memory pressure with the multiple predefined memory pressure in a given sequence, and determine a memory reclamation ratio corresponding to a matched one of the multiple predefined memory pressure as the memory reclamation ratio corresponding to the memory pressure.

The reclamation parameter obtaining unit 520 is configured to obtain a memory reclamation ratio corresponding to the memory pressure. The memory reclamation ratio represents proportions of multiple memory reclamation objects. The memory reclamation ratio corresponding to a higher memory pressure may indicate a lower proportion of at least one memory reclamation object that may require CPU resource consumption.

In one embodiment, the reclamation parameter obtaining unit 520 is specifically configured to obtain a preset memory reclamation ratio corresponding to the memory pressure, obtain a pre-calculated ratio adjustment parameter, and update the preset memory reclamation ratio based on the ratio adjustment parameter to acquire the memory reclamation ratio corresponding to the memory pressure. The ratio adjustment parameter represents reclamation difficulty of the unreclaimed memory.

In one embodiment, the reclamation parameter obtaining unit 520 is specifically configured to reduce a proportion of memory reclamation objects which consume CUP resources in the preset memory reclamation ratio to acquire the memory reclamation ratio corresponding to the memory pressure when the ratio adjustment parameter indicates the unreclaimed memory is used to support a file system, and take the preset memory reclamation ratio as the memory reclamation ratio corresponding to the memory pressure when the ratio adjustment parameter indicates the unreclaimed memory is used for data storage.

The memory reclamation unit 530 is configured to perform memory reclamation based on the memory reclamation ratio.

Referring to FIG. 8, the apparatus 500 in FIG. 8 further include a memory supplement reclamation unit 540.

The memory supplement reclamation unit 540 is configured to: obtain a memory reclamation target corresponding to the current memory reclamation scenario; determine memory reclamation targets of the memory reclamation objects based on the memory reclamation ratio; obtain a memory difference value when a memory reclamation target of a single memory reclamation object is larger than current reclaimable memory of the single memory reclamation object, wherein the memory difference value is a difference value between the memory reclamation target and the current reclaimable memory of the single memory reclamation object; augment the memory reclamation targets of the memory reclamation objects other than the single memory reclamation object so as to satisfy the memory reclamation target of the current memory reclamation scenario.

In one embodiment, the multiple memory reclamation objects may include anonymous pages and file-backed pages. The memory supplement reclamation unit 540 is further configured to: when the memory reclamation objects of which the memory reclamation targets are to be augmented are file-backed pages, perform the augmenting the memory reclamation targets of the memory reclamation objects other than the single memory reclamation object; when the memory reclamation objects of which the memory reclamation targets are to be augmented are anonymous pages, cancel the augmenting the memory reclamation targets of the memory reclamation objects other than the single memory reclamation object.

It should be noted, the apparatus-related embodiments are related to the method-related embodiments of the present disclosure. Specific principles and methods involved in the apparatus-related embodiments may be referred to in foregoing method-related embodiments, which will not be repeated herein.

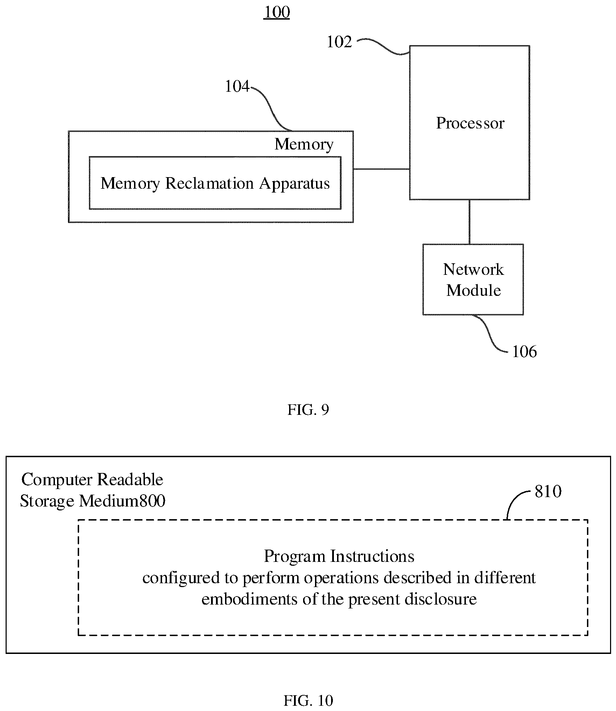

An electronic device provided by the present disclosure will be described below with reference to FIG. 9.

Referring to FIG. 9, based on the above-mentioned method and apparatus for memory reclamation, embodiments of the present disclosure further provide an electronic device 100 which is capable of performing the foregoing memory reclamation method. The electronic device 100 include one or more processors 102 (although only one is shown in FIG. 9) coupled to each other, a memory 104 and a network module 106. The memory 104 is configured to store programs which are capable of performing the foregoing methods, and the processor 104 is configured to execute programs stored in the memory 104.

The processor 102 can include one or more processing cores. The processor 102 is coupled to various components of the electronic device 100 via various interfaces and lines, and perform various functions and processing data of the electronic device 100 by executing or running instructions, programs, sets of code and sets of instructions stored in the memory 104, and by invoking data stored in the memory 104. Alternatively, the processor 102 may be selected from at least one of a digital signal processing (DSP), a field-programmable gate array (FPGA), and a programmable logic array (PLA). The processor 102 can integrate one or a combination of any of a central processing unit (CPU), a graphics processing unit (GPU), a modem, and the like. The CPU mainly deals with the operating system, user interface and applications, etc.; and the GPU is responsible for rendering and rendering of the display content. The modem is used to supply a wireless communication. It can be understood that the above modem may also be integrated into the processor 102 and implemented by a single communication chip.

The memory 104 may include a random-access memory (RAM), and may also include a readonly memory. Memory 104 can be used to store instructions, programs, code, code sets, or sets of instructions. The memory 104 may include a program storage area and a data storage area. For example, the memory 104 may store a memory reclamation apparatus. The memory reclamation apparatus may be the above-mentioned apparatus 500. The program storage area may store instructions for implementing an operating system, instructions for implementing at least one function (such as a touch function, a sound playing function, an image playing function, etc.), instructions for implementing the above-mentioned method embodiments, and the like. The storage data area can also store data (such as phone book, audio and video data, chat record data) created by the terminal 100 in use.

The network module 106 is configured to receive and transmit electromagnetic waves, and perform a mutual conversion between electromagnetic waves and electrical signals. Thereby communicating with a communication network or other devices, for example, communicating with wireless access points, may be achieved. The network module 106 can include various circuit elements for performing these functions above, such as an antenna, a radio frequency transceiver, a digital signal processor, an encryption/decryption chip, a Subscriber Identity Module (SIM) card, a memory, etc. The network module 106 can communicate with various networks such as the Internet, an intranet, a wireless network, or communicate with other devices via a wireless network. The wireless network described above may include a cellular telephone network, a wireless local area network, or a metropolitan area network.

FIG. 10 illustrates a schematic diagram of a computer readable storage medium according to an embodiment of the present disclosure. The computer readable storage medium 800 is configured to store program instructions, which are configured to, when being executed by a processor, perform the method described in any one of the foregoing embodiments.

The computer readable storage medium 800 can be an electronic memory such as a flash memory, an EEPROM (Electrically Erasable Programmable Read Only Memory), an EPROM, a hard disk, or an ROM. Alternatively, the computer readable storage medium 800 includes a non-transitory computer-readable storage medium. The computer readable storage medium 800 has a storage space for program code 810 that performs any of the operations of the methods described above. The program code can be read from or written to one or more computer program products. Program code 810 can be compressed, for example, in a suitable form.

The present application provides a method for memory reclamation, a n apparatus, an electronic device and a storage medium. Current memory pressure which represents the ratio between unreclaimed memory and scanned memory may firstly be acquired in a memory reclamation scenario. Then the memory reclamation ratio corresponding to the memory pressure may be obtained. The memory reclamation may be performed based on the memory reclamation ratio. According to the present disclosure, in the circumstance where different memory pressure corresponds to different memory reclamation ratios, the current memory pressure may firstly be acquired at the beginning of memory reclamation, and then the memory amount which should be reclaimed of each of the memory reclamation objects may be determined based on the current memory pressure. Thus, the implementation of the present disclosure may improve the flexibility of memory reclamation.

It should be noted that the above embodiments are only used to illustrate the technical solutions of the present disclosure, rather than limit the protection scope. Although the present disclosure has been described in detail with reference to the foregoing embodiments, those of ordinary skill in the art should understand that the technical solutions recorded in the foregoing embodiments may also be modified, or some technical features thereof may be equivalently replaced. These possible modifications or replacements should not be considered as rendering the essence of the corresponding technical solution(s) depart from the spirit and scope of the technical solutions of the embodiments of the present disclosure.

## Claims

1. A memory reclamation method, comprising:
obtaining memory pressure in a memory reclamation scenario, wherein the memory pressure represents a ratio between unreclaimed memory and scanned memory in a historical time window;
obtaining a memory reclamation ratio corresponding to the memory pressure, wherein the memory reclamation ratio represents proportions of a plurality of memory reclamation objects, wherein the memory reclamation ratio corresponding to a higher memory pressure indicates a lower proportion of at least one of the plurality of memory reclamation objects that requires CPU resource consumption; and
performing memory reclamation based on the memory reclamation ratio.

2. The method of claim 1, wherein the obtaining the memory pressure comprises:
determining a complete historical period of periodic historical periods which is closest to a current moment as a specified period; and
obtaining stored memory pressure of the specified period.

3. The method of claim 2, wherein the obtaining the stored memory pressure of the specified period comprises:
obtaining a characteristic parameter of current applications, wherein the characteristic parameter of the current applications represents an occupation level of CPU resources of the current applications;
determining, based on the characteristic parameter of the current applications, a target historical period which corresponds to the current moment as the specified period; and
obtaining the stored memory pressure of the specified period.

4. The method of claim 3, wherein the determining, based on the characteristic parameter of the current applications, the target historical period which corresponds to the current moment as the specified period comprises:
comparing the characteristic parameter of the current applications with characteristic parameters of applications of a plurality of other historical periods;
determining one of the plurality of other historical periods whose characteristic parameter of applications is the same as the characteristic parameter of the current applications as the target historical period; and
determining the target historical period as the specified period.

5. The method of claim 3, wherein the obtaining the characteristic parameter of the current applications comprises:
obtaining a ratio between an amount of threads activated by the current applications and a total amount of threads processed by the CPU in parallel; and
taking the ratio between the amount of the threads activated by the current applications and the total amount of the threads processed by the CPU in parallel as the characteristic parameter of the current applications, wherein a higher characteristic parameter of applications represents a higher occupation level of CPU resources.

6. The method of claim 3, wherein the obtaining the characteristic parameter of the current applications comprises:
obtaining, at an end of each of the periodic historical periods, a ratio between an average number of threads of all applications in a current period and a total amount of threads processed by the CPU in parallel; and
taking the ratio between the average number of threads of all applications in the current period and the total amount of threads processed by the CPU in parallel as the characteristic parameter of the current applications.

7. The method of any one of claims 2 to 6, further comprising:
obtaining an amount and priority levels of the applications in operation of each of the periodic historical periods, wherein a higher priority level indicates higher memory occupation during operation of the applications;
obtaining a first score corresponding to the amount of applications in operation;
obtaining a second score corresponding to the priority levels of the applications in operation; and
calculating a characteristic parameter of corresponding applications of each of the periodic historical periods based on the first score, a first predefined weight corresponding to the first score, the second score and a second predefined weight corresponding to the second score.

8. The method of claim 2, wherein the obtaining the memory reclamation ratio corresponding to the memory pressure comprises:
obtaining a mapping relationship between a plurality of predefined memory pressure and corresponding memory reclamation ratios;
matching the memory pressure with the plurality of predefined memory pressure in a given sequence; and
determining a memory reclamation ratio corresponding to a matched one of the plurality of predefined memory pressure as the memory reclamation ratio corresponding to the memory pressure.

9. The method of claim 1, before the obtaining the memory reclamation ratio corresponding to the memory pressure, further comprising:
identifying an identifier of a process currently performing the memory reclamation; and
determining a current memory reclamation scenario based on the identifier, wherein different memory is required to be reclaimed in different memory reclamation scenarios.

10. The method of claim 9, wherein the obtaining the memory reclamation ratio corresponding to the memory pressure comprises:
obtaining preset reclamation ratios of anonymous pages to file-backed pages corresponding to different memory reclamation processes;
obtaining an identifier of a memory reclamation process responsive to detection of beginning of the memory reclamation process; and
inquiring a corresponding reclamation ratio of anonymous pages to file-backed pages according to the identifier, and taking the corresponding reclamation ratio of the anonymous pages to file-backed pages as the corresponding memory reclamation ratio corresponding to the current memory reclamation scenario.

11. The method of claim 1, before the obtaining the memory reclamation ratio corresponding to the memory pressure, further comprising:
determining a current memory reclamation scenario based on currently running applications, wherein different memory is required to be reclaimed in different memory reclamation scenarios.

12. The method of claim 11, wherein the obtaining the memory reclamation ratio corresponding to the memory pressure comprises:
obtaining a preset mapping relationship between applications and memory reclamation ratios;
detecting current applications in operation responsive to detection of beginning of a memory reclamation process; and
inquiring a memory reclamation ratio corresponding to the current applications, and taking the memory reclamation ratio corresponding to the current applications as the memory reclamation ratio corresponding to the memory pressure.

13. The method of claim 1, wherein the obtaining the memory reclamation ratio corresponding to the memory pressure comprises:
obtaining a preset memory reclamation ratio corresponding to the memory pressure;
obtaining a ratio adjustment parameter which is pre-calculated, wherein the ratio adjustment parameter represents reclamation difficulty of the unreclaimed memory; and
updating the preset memory reclamation ratio based on the ratio adjustment parameter to obtain the memory reclamation ratio corresponding to the memory pressure.

14. The method of claim 13, wherein the updating the preset memory reclamation ratio based on the ratio adjustment parameter to obtain the memory reclamation ratio corresponding to the memory pressure comprises:
when the ratio adjustment parameter indicates the unreclaimed memory is used to support a file system, reducing a proportion of at least one memory reclamation object which consumes CUP resources in the preset memory reclamation ratio, so as to acquire the memory reclamation ratio corresponding to the memory pressure; and
when the ratio adjustment parameter indicates the unreclaimed memory is used for data storage, taking the preset memory reclamation ratio as the memory reclamation ratio corresponding to the memory pressure.

15. The method of claim 1, after the performing memory reclamation based on the memory reclamation ratio, further comprising:
obtaining a memory reclamation target corresponding to the current memory reclamation scenario;
determining memory reclamation targets of the plurality of memory reclamation objects based on the memory reclamation ratio;
obtaining a memory difference value when a memory reclamation target of a single memory reclamation object is larger than current reclaimable memory of the single memory reclamation object, wherein the memory difference value is a difference value between the memory reclamation target and the current reclaimable memory of the single memory reclamation object;
augmenting the memory reclamation targets of the plurality of memory reclamation objects other than the single memory reclamation object so as to satisfy the memory reclamation target of the current memory reclamation scenario.

16. The method of claim 15, wherein the memory reclamation objects comprise anonymous pages and file-backed pages, wherein, before the augmenting the memory reclamation targets of the memory reclamation objects other than the single memory reclamation object, the method further comprises:
when the memory reclamation objects of which the memory reclamation targets are to be augmented are file-backed pages, performing the augmenting the memory reclamation targets of the plurality of memory reclamation objects other than the single memory reclamation object;
when the memory reclamation objects of which the memory reclamation targets are to be augmented are anonymous pages, cancelling the augmenting the memory reclamation targets of the plurality of memory reclamation objects other than the single memory reclamation object.

17. The method of claim 1, before the obtaining the memory pressure in the memory reclamation scenario, further comprising:
determining the memory reclamation scenario is entered when detecting a process configured to perform memory reclamation is performed.

18. An apparatus for memory reclamation, comprising:
a memory pressure obtaining unit, configured to obtain memory pressure in a memory reclamation scenario, wherein the memory pressure represents a ratio between unreclaimed memory and scanned memory in a historical time window;
a reclamation parameter obtaining unit, configured to obtain a memory reclamation ratio corresponding to the memory pressure, wherein the memory reclamation ratio represents proportions of a plurality of memory reclamation objects, wherein the memory reclamation ratio corresponding to a higher memory pressure indicates a lower proportion of at least one of the plurality of memory reclamation objects that require CPU resource consumption; and
a memory reclamation unit, configured to perform memory reclamation based on the memory reclamation ratio.

19. An electronic device, comprising one or more processors and a memory, wherein one or more programs are stored in the memory and configured to, when being executed by the one or more processors, perform the method of any one of claims 1 to 17.

20. A computer-readable storage medium configured to store program instructions, wherein the program instructions are configured to, when being executed by a processor, perform the method of any one of claims 1 to 17.
